(19) Europäisches Patentamt / European Patent Office / Office européen des brevets

(11) **EP 2 253 399 A1**

(12) **EUROPEAN PATENT APPLICATION**
published in accordance with Art. 153(4) EPC

(43) Date of publication:
**24.11.2010 Bulletin 2010/47**

(51) Int Cl.:
**B23B 19/00** (2006.01)   **B23B 19/02** (2006.01)
**B23Q 1/00** (2006.01)   **B23Q 11/00** (2006.01)

(21) Application number: **08740236.8**

(22) Date of filing: **11.04.2008**

(86) International application number:
**PCT/JP2008/057138**

(87) International publication number:
**WO 2009/101709 (20.08.2009 Gazette 2009/34)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.02.2008 JP 2008034975**

(71) Applicant: **Mitsubishi Heavy Industries, Ltd. Tokyo 108-8215 (JP)**

(72) Inventors:
• **INOUE, Atsushi**
  **Hiroshima**
  **Hiroshima-ken, 733-8553 (JP)**

• **FURUTATE, Satoshi**
  **Ritto, Shiga-ken, 520-3080 (JP)**
• **DOMARU, Hiroyuki**
  **Ritto, Shiga-ken, 520-3080 (JP)**
• **HASEGAWA, Tomoharu**
  **Ritto, Shiga-ken, 520-3080 (JP)**

(74) Representative: **Henkel, Feiler & Hänzel Patentanwälte Maximiliansplatz 21 80333 München (DE)**

(54) **MACHINE TOOL AND WORKING METHOD**

(57) In a machine tool or a processing method, a column base (12) is supported on a bed (11) movably in a horizontal direction, and a column (13) is installed vertically on the column base (12). A saddle (14) is supported on a side of the column (13) movably in a vertical direction, and a ram stock (15) is supported on the saddle (14) movably in a horizontal direction. A spindle (16) is rotatably supported by the ram stock (15), a damper (21) is provided on the ram stock (15), and an O-ring (22) is provided between the ram stock (15) and the damper (21), so that the O-ring (22) can be deformed by a pressing member (23). An NC device (24) can adjust a deformation degree of the O-ring (22) by the pressing member (23) depending on a mass of an attachment (17). Therefore, vibration of a tool can be effectively damped by changing a natural frequency according to replacement or movement of the attachment.

FIG.1

EP 2 253 399 A1

**Description**

TECHNICAL FIELD

The present invention relates to a machine tool such as a horizontal boring and milling machine, and, more particularly to a machine tool having a vibration damping mechanism that suppresses vibration occurring in a movable body having a spindle, and a processing method.

BACKGROUND ART

For example, in a horizontal boring and milling machine, a column base is supported on a bed movably along a longitudinal direction of the bed, and a column is installed vertically on the column base. A saddle is supported on the column movably along the vertical direction, and a ram stock is supported on the saddle movably along a horizontal direction orthogonal to a moving direction of the column base. Further, a spindle is rotatably supported by the ram stock so that a tool can be attached to a tip end of the spindle.

Therefore, while a predetermined tool is attached to the tip end of the spindle, a workpiece is held on a side of a table. While the spindle is rotated in this state, the column base is horizontally moved, the saddle is moved vertically, and the ram stock is moved horizontally, to thereby perform predetermined machining with respect to the workpiece by using the tool.

In a machine tool such as a horizontal boring and milling machine, a ram stock and the like are manufactured by casting, and therefore the machine tool has a natural frequency determined by a spring constant and a mass. Accordingly, when the spindle rotates, resonance occurs at a specific number of revolutions according to the natural frequency. When a cutting force is generated by the tool, vibration of the spindle increases. When vibration of the spindle increases, deflection of the tip end of the tool attached to the spindle increases, to thereby decrease machining accuracy.

The following Patent Documents 1 and 2 disclose a method of reducing vibrations of a spindle. In a machine tool disclosed in Patent Document 1, concrete is appropriately filled and sealed in a square frame of a first saddle, in a square frame of a second saddle, and in a horizontal guide frame to form a damping structure, so that vibration of a spindle head is suppressed to enable highly accurate machining. Further, in a support structure of a spindle disclosed in Patent Document 2, the tip end of the spindle of a machining center, to which the tool is attached, is strongly supported by two bearings, and the other end thereof is supported by one bearing having a damper, to thereby efficiently suppress vibration particularly at the tip end to which the tool is attached.

Patent Document 1: Japanese Patent No. 3256879

Patent Document 2: Japanese Patent Application Laid-open No. 2004-150563

DISCLOSURE OF INVENTION

PROBLEM TO BE SOLVED BY THE INVENTION

In the machine tool disclosed in Patent Document 1 mentioned above, because concrete is filled and sealed inside the respective components to form the damping structure, the weight of an apparatus increases. Therefore, a large driving force is required to move the apparatus, thereby making the apparatus larger and requiring higher cost.

In the machine tool such as the horizontal boring and milling machine, the spindle is rotatably supported by the ram stock, and the tool is attached to the spindle. However, such a structure is not suitable for complicated machining such as multi-spindle machining and 5-spindle machining. Therefore, the tool is attached to the ram stock via an attachment so that machining of a complicated shape can be performed. Accordingly, the natural frequency changes corresponding to the weight and a shifting position of the attachment. Even if the spindle of the machining center is supported by the bearing having the damper, as in the spindle support structure described in Patent Document 2, if the natural frequency changes due to a change of the weight due to replacement of the attachment or a change of a position due to the movement of the ram stock, it is difficult to suppress the vibration by the damper.

The present invention has been achieved to solve the above problems, and it is an object of the present invention to provide a machine tool and a processing method that enable to effectively damp vibrations of a tool by changing a natural frequency depending on replacement or movement of an attachment.

MEANS FOR SOLVING PROBLEM

According to an aspect of the present invention, a machine tool has a machine tool body, a movable body movably supported with respect to the machine tool body, a spindle rotatably supported by the movable body, and an attachment attachable and detachable to and from a tip end of the movable body. The machine tool comprises: a vibration damping unit provided on the movable body; an elastic body provided between the movable body and the vibration damping unit; a deforming unit that deforms the elastic body; and a deformation-degree adjusting unit that adjusts a deformation degree of the elastic body by the deforming unit depending on a mass or a shifting position of the attachment.

Advantageously, in the machine tool, a vertically movable body may be supported movably along a vertical direction with respect to the machine tool, and a horizontally movable body may be supported movably along a horizontal direction with respect to the machine tool, the attachment may be attachable and detachable to and from the tip end of the horizontally movable body, and the deformation-degree adjusting unit may adjust the deformation degree of the elastic body by the deforming unit depending on the mass of the attachment or the shifting position of the attachment by the horizontally movable body.

Advantageously, in the machine tool, a damper in a ring shape may be supported as the vibration damping unit inside of the horizontally movable body via the elastic body, a pressing member that presses and deforms the elastic body may be provided as the deforming unit inside of the horizontally movable body, and the deformation-degree adjusting unit may press the elastic body by the pressing member to adjust deformation degree thereof, thereby adjusting a natural frequency of the damper.

Advantageously, in the machine tool, the elastic body may be an O-ring held so that it comes in contact with the damper, and the pressing member may press the O-ring to adjust the natural frequency of the damper.

Advantageously, in the machine tool, a vibration detector that detects vibration of the movable body may be provided, and the deformation-degree adjusting unit may adjust a deformation degree of the elastic body according to a detection result of the vibration detector.

According to another aspect of the present invention, a processing method in a machine tool has a machine tool body, a movable body movably supported with respect to the machine tool body, a spindle rotatably supported by the movable body, and an attachment attachable and detachable to and from a tip end of the movable body. The processing method comprises: providing an elastic body between the movable body and the vibration damping unit so that the elastic body can be deformed by the deforming unit; and performing a process by a tool attached to the attachment while adjusting a deformation degree of the elastic body by the deforming unit depending on a mass or a shifting position of the attachment.

EFFECT OF THE INVENTION

According to an embodiment of the present invention, a machine tool includes a vibration damping unit provided on the movable body; an elastic body provided between the movable body and the vibration damping unit; a deforming unit that deforms the elastic body; and a deformation-degree adjusting unit that adjusts a deformation degree of the elastic body by the deforming unit depending on a mass or a shifting position of the attachment. The deformation-degree adjusting unit adjusts a deformation degree of the elastic body by the deforming unit, when the mass changes due to replacement of the attachment or when the attachment moves to change the position, so that a natural frequency of the vibration damping unit is tuned to that of the movable body. The vibration is damped by resonance phenomena of the vibration damping unit and the movable body to effectively damp the vibration of the tool, to thereby enable to improve the machining accuracy.

According to an embodiment of the present invention, a vertically movable body is supported movably along a vertical direction with respect to the machine tool, and a horizontally movable body is supported movably along a horizontal direction with respect to the machine tool, the attachment is attachable and detachable to and from the tip end of the horizontally movable body, and the deformation-degree adjusting unit adjusts the deformation degree of the elastic body by the deforming unit depending on the mass of the attachment or the shifting position of the attachment by the horizontally movable body. When the vertically movable body moves in the vertical direction or the horizontally movable body moves in the horizontal direction with respect to the machine tool body, the attachment also moves in the same direction. At this time, the deformation-degree adjusting unit adjusts the deformation degree of the elastic body by the deforming unit depending on the shifting position of the attachment, so that the natural frequency of the vibration damping unit is tuned to that of the movable body, thereby enabling to damp the vibration by the resonance phenomena.

According to an embodiment of the present invention, a damper in a ring shape is supported as the vibration damping unit inside of the horizontally movable body via the elastic body, a pressing member that presses and deforms the elastic body is provided as the deforming unit inside of the horizontally movable body, and the deformation-degree adjusting unit presses the elastic body by the pressing member to adjust deformation degree thereof, thereby adjusting a natural frequency of the damper. By providing the elastic body, the damper, and the pressing member in the horizontally movable body, it can be suppressed that the apparatus becomes large.

According to an embodiment of the present invention, the elastic body is an O-ring held so that it comes in contact with the damper, and the pressing member presses the O-ring to adjust the natural frequency of the damper. The natural frequency of the damper can be adjusted with a simple configuration, thereby enabling to simplify the structure and reduce the cost.

According to an embodiment of the present invention, a vibration detector that detects vibration of the movable body is provided, and the deformation-degree adjusting unit adjusts a deformation degree of the elastic body according to a detection result of the vibration detector. The deformation degree of the elastic body depending on the mass or the shifting position of the attachment need not be ascertained beforehand. The deformation-degree adjusting unit adjusts the deformation degree of the elastic body by the deforming unit according to a detection result of the vibration detector in an offline state, thereby enabling to effectively damp the vibration of the tool.

According to an embodiment of the present invention, a possessing method includes providing an elastic body between the movable body and the vibration damping unit so that the elastic body can be deformed by the deforming unit; and performing a process by a tool attached to the attachment while adjusting a deformation degree of the elastic body by the deforming unit depending on a mass or a shifting position of the attachment. When the mass of the attachment changes due to replacement or the position of the attachment changes due to the movement of the attachment, the deformation degree of the elastic body is adjusted by the deforming unit so that the natural frequency of the vibration damping unit is tuned to that of the movable body. The vibration is damped by the resonance phenomena of the vibration damping unit and the movable body to effectively damp the vibration of the tool, to thereby enable to improve the machining accuracy.

BRIEF DESCRIPTION OF DRAWINGS

[Fig. 1] Fig. 1 is a schematic configuration diagram of a horizontal boring and milling machine as a machine tool according to a first embodiment of the present invention.
[Fig. 2] Fig. 2 is a sectional view of a damper mounting unit in the horizontal boring and milling machine according to the first embodiment.
[Fig. 3] Fig. 3 is a sectional view along a line III-III in Fig. 2.
[Fig. 4] Fig. 4 is a schematic diagram of the horizontal boring and milling machine according to the first embodiment.
[Fig. 5] Fig. 5 is a graph of a spring constant with respect to an O-ring pressing amount.
[Fig. 6] Fig. 6 is a graph of a natural frequency of a movable mass system with respect to the O-ring pressing amount.
[Fig. 7] Fig. 7 is a graph of compliance with respect to a frequency.
[Fig. 8] Fig. 8 is a schematic configuration diagram of a horizontal boring and milling machine as a machine tool according to a second embodiment of the present invention.
[Fig. 9] Fig. 9 is a schematic configuration diagram of a horizontal boring and milling machine as a machine tool according to a third embodiment of the present invention.
[Fig. 10] Fig. 10 is a schematic diagram of an operating state of the horizontal boring and milling machine according to the third embodiment.
[Fig. 11] Fig. 11 is a schematic configuration diagram of a horizontal boring and milling machine as a machine tool according to a fourth embodiment of the present invention.
[Fig. 12] Fig. 12 is a graph expressing vibration amplitude with respect to a frequency.

EXPLANATIONS OF LETTERS OR NUMERALS

| 11 | bed |
| 12 | column base |
| 13 | column |
| 14 | saddle (vertically movable body) |
| 15 | ram stock (horizontally movable body) |
| 16 | spindle |
| 17 | attachment |
| 21, 41 | damper (vibration damping unit) |
| 22, 42 | O-ring (elastic body) |
| 23, 43 | pressing member (deforming unit) |
| 24 | NC device (deformation-degree adjusting unit) |

BEST MODE(S) FOR CARRYING OUT THE INVENTION

Exemplary embodiments of a machine tool and a processing method according to the present invention will be explained below in detail with reference to the accompanying drawings. The present invention is not limited the embodiments.

First Embodiment

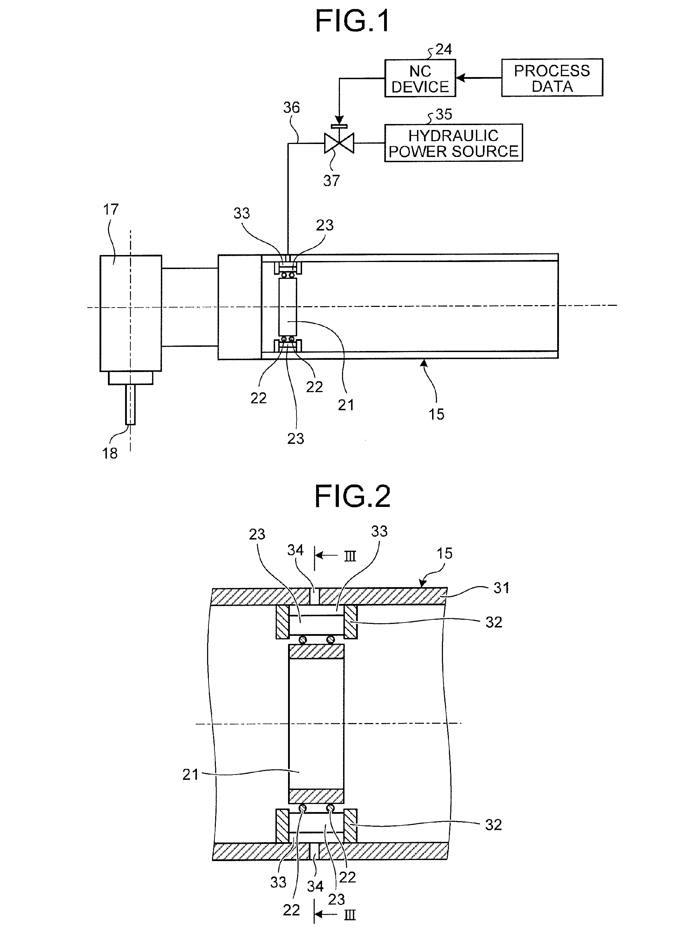

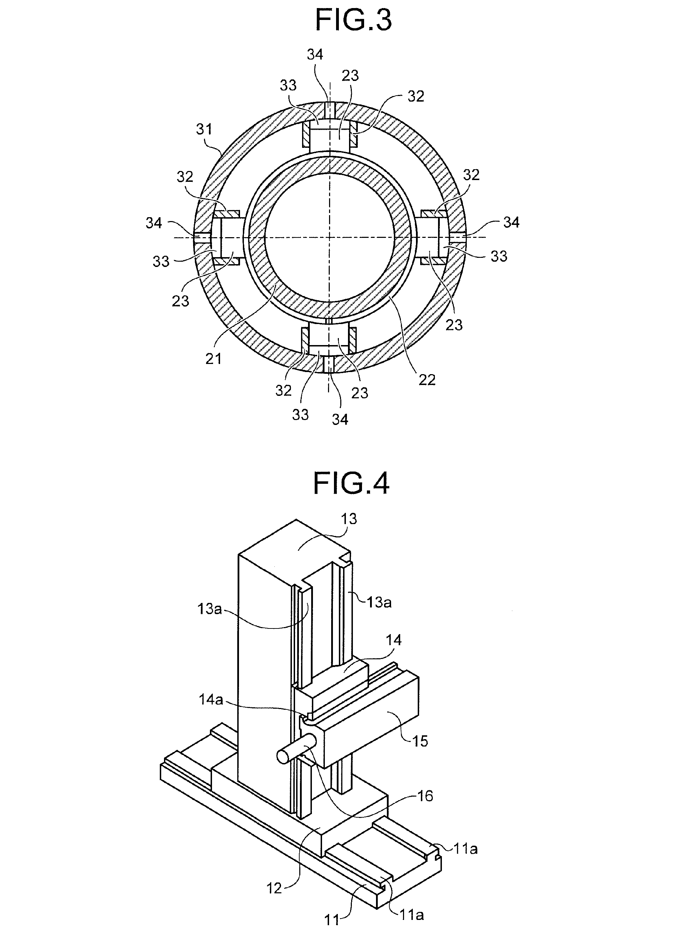

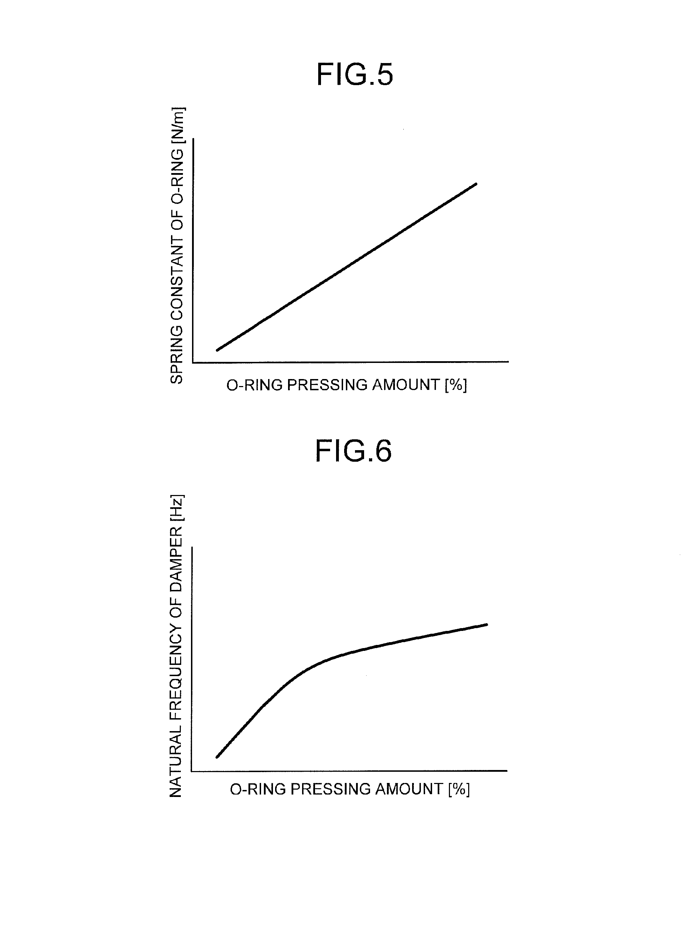

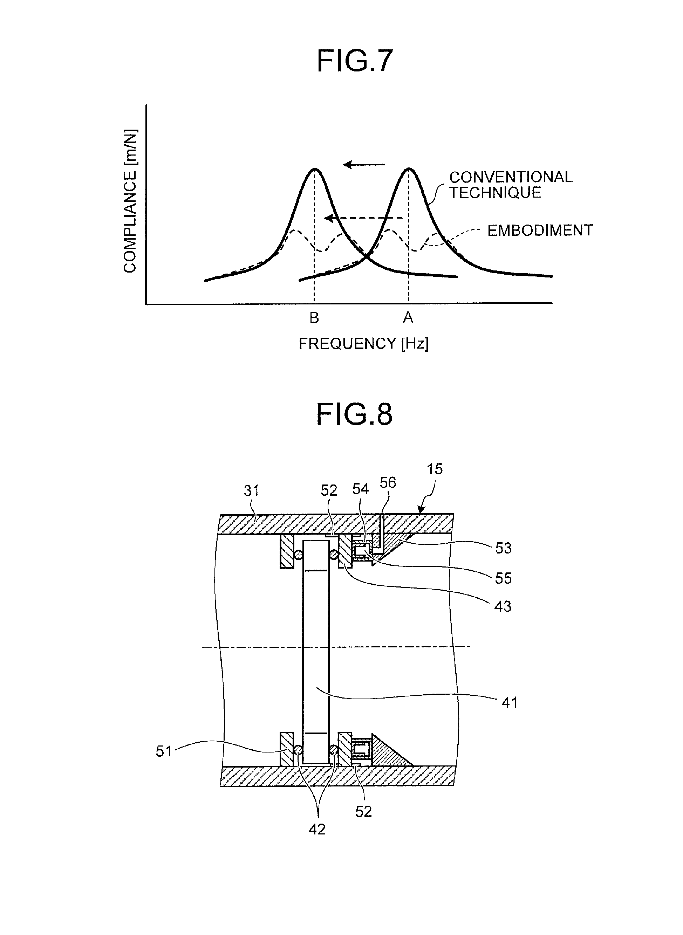

Fig. 1 is a schematic configuration diagram of a horizontal boring and milling machine as a machine tool according to a first embodiment of the present invention, Fig. 2 is a sectional view of a damper mounting unit in the horizontal boring and milling machine according to the first embodiment, Fig. 3 is a sectional view along a line III-III in Fig. 2, Fig. 4 is a schematic diagram of the horizontal boring and milling machine according to the first embodiment, Fig. 5 is a graph of a spring constant with respect to an O-ring pressing amount, Fig. 6 is a graph of a natural frequency of a movable mass system with respect to the O-ring pressing amount, and Fig. 7 is a graph of compliance with respect to a frequency.

In the first embodiment, the horizontal boring and milling machine is applied as the machine tool and explained. In the horizontal boring and milling machine according to the first embodiment, as shown in Fig. 4, a pair of guide rails 11a is formed on an upper face of a bed 11 installed at a predetermined position, and a column base 12 is movably supported by the guide rails 11a along the longitudinal direction of the bed 11. A column (machine tool body) 13 formed in a box shape is arranged on the upper face of the column base 12 along the vertical direction. A pair of guide rails 13a is formed on a side of the column 13, and a saddle (vertically movable body) 14 is movably supported by the guide rails 13a along the vertical direction. A pair of guide rails 14a is formed on a side of the saddle 14, and a ram stock (horizontally movable body) 15 is movably supported by the guide rails 14a along the horizontal direction orthogonal to the moving direction of the column base 12.

A spindle 16 penetrates the ram stock 15 along a direction parallel to the moving direction of the ram stock 15, and is rotatably supported by a bearing (not shown), so that the spindle 16 can be rotated by a drive motor built in the ram stock 15. The end of the spindle 16 projects outward from the ram stock 15, so that a tool (not shown) can be attached thereto. As shown in Fig. 1, an attachment 17 can be attached to the end of the ram stock 15, and a tool (not shown) can be attached to a driving shaft 18 of the attachment 17. In this case, the attachment 17 is detachable with respect to the ram stock 15, and can be replaced depending on the machining with respect to the workpiece.

Although not shown, the column base 12, the saddle 14, and the ram stock 15 can be moved by a drive unit (not shown).

Accordingly, while a predetermined tool is attached to the tip end of the spindle 16, the workpiece is held on a side of the bed. In this state, the spindle 16 is rotated, the column base 12 is horizontally moved, the saddle 14 is vertically moved, and the ram stock 15 is horizontally moved to perform predetermined machining with respect to the workpiece by the tool.

Further, as shown in Figs. 1 to 3, a hollow damper 21 in a ring shape as a vibration damping unit is supported in the ram stock 15, and an O-ring 22 as an elastic body is provided between the ram stock 15 and the damper 21 so that it comes in contact with the damper 21. Also in the ram stock 15, a pressing member 23 that presses and deforms the O-ring 22 is provided as a deforming unit that deforms the O-ring 22. An NC device 24 is provided as a deformation-degree adjusting unit that adjusts a deformation degree of the O-ring 22 by the pressing member 23, that is, a pressing amount based on a mass of the attachment 17. In this case, the natural frequency of the damper 21 is adjusted by pressing the O-ring 22 by the pressing member 23 to adjust the deformation degree thereof.

That is, cylinders 32 in a cylindrical shape are positioned and fixed near the side of the housing 31 where the attachment 17 is attached, with a predetermined gap in a circumferential direction of the housing 31 in the ram stock 15, and the pressing member 23 in a piston shape is movably supported in the respective cylinders 32 along a radial direction of the ram stock 15. The damper 21 is supported by the ends of the respective pressing members 23 via the O-rings 22. In this case, a plurality of (two in the first embodiment) O-rings 22 is installed between the pressing member 23 and the damper 21 in an axial direction (longitudinal direction) of the ram stock 15.

Further, a plurality of pressure chambers 33 defined by the housing 31, the respective cylinders 32, and the respective pressing members 23 are defined inside of the ram stock 15, and continuous holes 34 communicating from outside to the respective pressure chambers 33 are respectively formed in the housing 31. An end of a hydraulic piping 36 connected to a hydraulic power source 35 is connected to the respective continuous holes 34, and a flow regulating valve 37 is attached to the hydraulic piping 36.

Accordingly, when the flow regulating valve 37 is opened to adjust an aperture thereof, hydraulic pressure of the hydraulic power source 35 is supplied from the respective continuous holes 34 to the respective pressure chambers 33 through the hydraulic piping 36, so that the respective pressing members 23 move forward to press the O-rings 22 to deform the shape of the O-rings 22 and change the spring constant of the O-rings 22, thereby enabling to adjust the natural frequency of the damper 21. An exhaust pipe (not shown) having the flow regulating valve is connected to the pressure chambers 33. Accordingly, when the flow regulating valve is opened to adjust the aperture thereof, the hydraulic pressure of the pressure chambers 33 is exhausted, and the respective pressing members 23 move backward to decrease the pressing amount of the O-rings 22 to deform the shape of the O-rings 22, and change the spring constant of the O-rings 22, thereby enabling to adjust the natural frequency of the damper 21.

The numerical control machining (NC) device 24 can control a numerical value of the column base 12, the saddle 14, the ram stock 15, and the spindle 16 based on preset NC program data (machining data). That is, the NC device 24 drives and controls the drive unit based on the NC program data, thereby enabling to control the movement of the ram stock 15. The NC device 24 also drives and controls an automatic tool changer (not shown) based on the NC program data (machining data), and selects the attachment 17 required to the machining, thereby enabling to attach the attachment 17 to the ram stock 15.

The NC device 24 adjusts the aperture of the flow regulating valve 37 according to the mass of the attachment 17 attached to the ram stock 15, and controls the hydraulic pressure supplied to the respective pressure chambers 33, to adjust the pressing amount of the O-rings by the respective pressing members 23. Further, the deformation degree of the O-rings 22 is adjusted, thereby enabling to adjust the natural frequency of the damper 21.

When it is assumed that the mass on the ram stock 15 side to which the attachment 17 is attached is M, and the mass on the damper 21 side is m, a mass ratio $\mu$ therebetween can be obtained by the following equation (1).

[Equation 1]

$$\mu = \frac{m}{M} = \text{Mass ratio} \tag{1}$$

When it is assumed that the spring constant on the ram stock 15 side (main vibration system) to which the attachment 17 is attached is K, a natural frequency $\Omega n$ can be obtained by the following equation (2).

[Equation 2]

$$\Omega_n = \sqrt{\frac{K}{M}} = \text{Natural frequency of main vibration system} \tag{2}$$

On the other hand, when it is assumed that the spring constant on the damper 21 side and the O-ring 22 side (a dynamic vibration absorber) is k, a natural frequency $\omega n$ can be obtained by the following equation (3).

[Equation 3]

$$\omega_n = \sqrt{\frac{k}{m}} = \text{Natural frequency of dynamic vibration absorber} \tag{3}$$

Accordingly, an optimum frequency ratio between the main vibration system and the dynamic vibration absorber can be obtained by the following equation (4).

[Equation 4]

$$\frac{\omega_n}{\Omega_n} = \frac{1}{1 + \mu} \tag{4}$$

That is, when the mass of the attachment 17 attached to the ram stock 15 changes, the spring constant K in the equation (2) also changes. Therefore, by adjusting the spring constant k of the O-ring 22 in the equation (3) according to the spring constant K, the equation (4) can be established. That is, the NC device 24 can perform control based on a map of the pressing amount of the O-ring 22 depending on the mass change of the attachment 17.

As shown in Fig. 5, when the pressing amount of the O-rings 22 increases, the spring constant of the O-rings 22 changes to increase. Therefore, as shown in Fig. 6, when the pressing amount of the O-rings 22 increases, the natural frequency of the damper 21 also changes to increase. Accordingly, when the mass of the attachment 17 attached to the ram stock 15 changes, the spring constant K also changes to change the natural frequency $\Omega n$.
Therefore, the vibration on the ram stock 15 side can be efficiently damped by changing the pressing amount of the O-rings 22 corresponding thereto to adjust the spring constant k and adjust the natural frequency $\omega n$ of the damper 21.

Accordingly, because the NC device 24 can determine the mass of the attachment 17 based on the input NC program data (machining data), the NC device 24 adjusts the aperture of the flow regulating valve 37 depending on the mass of the attachment 17 to supply (or exhaust) predetermined hydraulic pressure to the respective pressure chambers 33. As a result, the respective pressing members 23 move forward (or backward) to change the pressing amount of the O-rings 22 to thereby deform the shape thereof, and the spring constant of the O-rings 22 is changed to adjust the natural frequency of the damper 21.

Therefore, when machining is performed by using the horizontal boring and milling machine in which the damper 21 is not attached to the ram stock 15 as in the conventional technique, as shown by a solid line in Fig. 7, for example, the compliance (m/N) becomes large at the time of a frequency A to generate large vibrations. Even when the attachment 17 is replaced to shift to a frequency B, large compliance occurs. On the other hand, as in the first embodiment, when the machining is performed by using the horizontal boring and milling machine in which the damper 21 is attached to the ram stock 15, as indicated by a dotted line in Fig. 7, for example, the compliance becomes small at the time of the frequency A. Even when the attachment 17 is replaced to shift to the frequency B, the compliance is appropriately decreased.

Thus, in the horizontal boring and milling machine and the processing method thereof according to the first embodiment, the column base 12 is supported on the bed 11 movably in the horizontal direction, the column 13 is installed vertically on the column base 12, the saddle 14 is supported on the side of the column 13 movably in the vertical direction, the ram stock 15 is supported on the saddle 14 movably in the horizontal direction, and the spindle 16 is rotatably supported by the ram stock 15. Further, the damper 21 is provided on the ram stock 15 as the vibration damping unit, the O-rings 22 are provided between the ram stock 15 and the damper 21 as the elastic body so that the O-rings 22 can be deformed by the pressing members 23 as the deforming unit, and the NC device as the deformation-degree adjusting unit can adjust the deformation degree of the O-rings 22 by the pressing members 23 depending on the mass of the attachment 17.

Accordingly, when the attachment 17 is changed to change the mass, the NC device 24 adjusts the aperture of the flow regulating valve 37 depending on the mass of the attachment 17 to supply (or exhaust) the predetermined hydraulic pressure to the respective pressure chambers 33. Accordingly, the respective pressing members 23 move to change the pressing amount of the O-rings 22 and deform the shape thereof, and also change the spring constant of the O-rings 22, thereby adjusting the natural frequency of the damper 21. Therefore, the natural frequency of the damper 21 is tuned to that of the ram stock 15, the vibration of the ram stock 15 is damped due to the resonance phenomena of the damper 21 and the ram stock 15, and the vibration of the tool is efficiently damped, thereby enabling to improve the machining accuracy.

In the horizontal boring and milling machine according to the first embodiment, the O-ring is used as the elastic member, the O-ring 22 is held to come in contact with the damper 21, and the pressing member 23 presses the O-ring 22, thereby enabling to adjust the natural frequency of the damper 21. Accordingly, the natural frequency of the damper 21 can be easily adjusted with a simple configuration, thereby enabling to simplify the structure and reduce the cost.

Second embodiment

Fig. 8 is a schematic configuration diagram of a horizontal boring and milling machine as a machine tool according to a second embodiment of the present invention. The overall configuration of the machine tool according to the second embodiment is substantially the same as that of the first embodiment. The second embodiment is explained with reference to Fig. 4, and like reference numerals refer to like parts having the same function as in the first embodiment, and redundant explanations thereof will be omitted.

In the horizontal boring and milling machine, as shown in Figs. 1 to 8, a damper 41 in a ring shape as the vibration damping unit is supported in the ram stock 15, and an O-ring 42 as the elastic body is provided between the ram stock 15 and the damper 41 so that it comes in contact with the damper 41. Also in the ram stock 15, a pressing member 43 in a ring shape that presses and deforms the O-ring 42 is provided as the deforming unit that deforms the O-ring 42. The NC device is provided as the deformation-degree adjusting unit that adjusts the deformation degree of the O-ring 42 by the pressing member 43, that is, the pressing amount based on the mass of the attachment 17. In this case, the natural frequency of the damper 41 is adjusted by pressing the O-ring 42 by the pressing member 43 to adjust the deformation degree thereof.

That is, in the ram stock 15, a pair of cylindrical installing rings 51 is positioned and arranged near the side near the side of the housing 31 where the attachment 17 is attached, with a predetermined gap in a circumferential direction on an inner surface of the housing 31, the damper 41 is arranged adjacent to the installing ring 51, and the pressing member 43 is arranged adjacent to the damper 41. The installing ring 51 is fixed to the housing 31, and the pressing member 43 is movable along the axial direction (longitudinal direction) of the ram stock 15 by a rail 52 attached to the inner surface of the housing 31. The O-ring 42 is installed between the installing ring 51 and the damper 41, and between the damper 41 and the pressing member 43.

A support ring 53 is fixed opposite to the pressing member 43, an elastic member 54 formed of frames fitting to each other is provided between the pressing member 43 and the support ring 53. A pressure chamber 33 is defined in the elastic member 54, and a continuous hole 56 communicating from outside to the pressure chamber 55 is formed in the housing 31 and the support ring 53. An end of a connected hydraulic piping of the hydraulic power source (not shown) is connected to the respective continuous holes 56, and a flow regulating valve is attached to the hydraulic piping.

Accordingly, when an aperture of the flow regulating valve is adjusted, hydraulic pressure of the hydraulic power source is supplied from the respective continuous holes 56 to the respective pressure chambers 55 through the hydraulic piping, so that the elastic member expands and contracts to move the pressing member 43 to thereby press the O-ring 42 and deform the shape thereof. Therefore, the spring constant of the O-ring 42 changes, so that the natural frequency of the damper 41 can be adjusted. In this case, the NC device adjusts the aperture of the flow regulating valve according to the mass of the attachment 17 attached to the ram stock 15, controls the hydraulic pressure supplied to the pressure chamber 55 to thereby adjust the pressing amount of the O-ring 42 by the pressing member 43, and also adjusts the deformation degree of the O-ring 42, thereby adjusting the natural frequency of the damper 41.

When the mass of the attachment 17 attached to the ram stock 15 changes, the spring constant changes to change the natural frequency. In response thereto, the pressing amount of the O-ring 42 is changed to adjust the spring constant, and the natural frequency $\omega n$ of the damper 41 is adjusted to efficiently damp the vibration on the ram stock 15 side.

In the horizontal boring and milling machine and the processing method thereof according to the second embodiment, the installing ring 51 in a ring shape, the damper 41, and the pressing member 43 are provided in proximity in a row arrangement, and the O-ring 42 is provided therebetween, thereby enabling to deform the O-ring 42 by the pressing member 43. Accordingly, the NC device can adjust the deformation degree of the O-ring 42 by the pressing member 43 depending on the mass of the attachment 17.

Accordingly, in the NC device, when the attachment 17 is replaced and the mass thereof changes, the pressing member 43 is moved by the hydraulic pressure depending on the mass of the attachment 17 to change the pressing amount of the O-ring 42 to thereby deform the shape thereof, and the spring constant of the O-ring 42 changes to adjust the natural frequency of the damper 41. Therefore, the natural frequency of the damper 41 is tuned to that of the ram stock 15, the vibration of the ram stock 15 is damped due to the resonance phenomena of the damper 41 and the ram stock 15, and the vibration of the tool is efficiently damped, thereby enabling to improve the machining accuracy.

In the horizontal boring and milling machine according to the second embodiment, the O-ring is used as the elastic member, the O-ring 42 is held to come in contact with the damper 41, and the pressing member 43 presses the entire O-ring 42 to deform the O-ring 42, thereby enabling to adjust the natural frequency of the damper 41. Accordingly, the natural frequency of the damper 41 can be adjusted in a large area with a simple configuration, thereby enabling to simplify the structure and reduce the cost.

Third embodiment

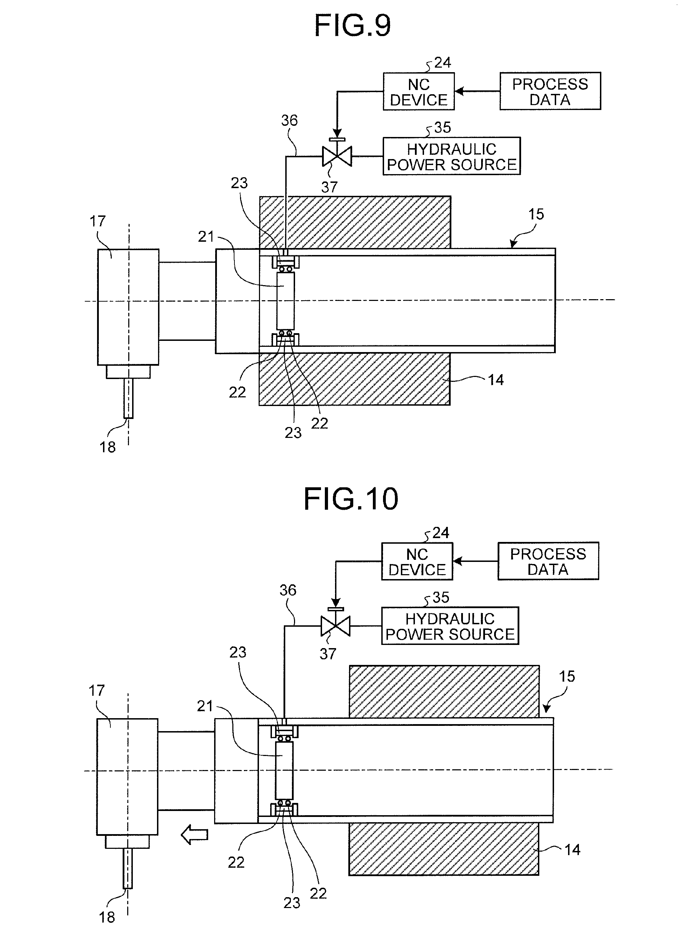

Fig. 9 is a schematic configuration diagram of a horizontal boring and milling machine as a machine tool according to a third embodiment of the present invention. Fig. 10 is a schematic diagram of an operating state of the horizontal boring and milling machine according to the third embodiment. Like reference numerals refer to like parts having the same function as in the above embodiments, and redundant explanations thereof will be omitted.

In the horizontal boring and milling machine according to the third embodiment, as shown in Fig. 9, the damper 21 is supported inside of the ram stock 15, and the O-ring 22 as the elastic body is provided between the ram stock 15 and the damper 21 so that it comes in contact with the damper 21. Also in the ram stock 15, the pressing member 23 that presses and deforms the O-ring 22 is provided. The NC device 24 is provided as the deformation-degree adjusting unit that adjusts the deformation degree of the O-ring 22 by the pressing member 23, that is, the pressing amount based on the shifting position of the attachment 17. In this case, the O-ring 22 is pressed by the pressing member 23 to adjust the deformation degree, thereby adjusting the natural frequency of the damper 21.

Accordingly, when the flow regulating valve 37 is opened to adjust the aperture thereof, hydraulic pressure of the hydraulic power source 35 is supplied from the respective continuous holes 34 to the respective pressure chambers 33 through the hydraulic piping 36, so that the respective pressing members 23 move forward to press the O-rings 22 to deform the shape thereof and change the spring constant of the O-rings 22, thereby enabling to adjust the natural frequency of the damper 21.

In this case, the NC device 24 adjusts the aperture of the flow regulating valve 37 depending on a projected amount (shifting position) of the ram stock 15 (the attachment 17) with respect to the saddle 14 to control the hydraulic pressure to be supplied to the respective pressure chambers 33, thereby adjusting the pressing amount of the O-rings 22 by the respective pressing members 23. Further, the NC device 24 can adjust the deformation degree, to adjust the natural frequency of the damper 21. The NC device can ascertain the projected amount (shifting position) of the ram stock 15 (the attachment 17) according to the input process data.

That is, as shown in Fig. 10, when the ram stock 15 moves forward to change the projected amount with respect to the saddle 14, a moment of inertia of the ram stock 15 with respect to the saddle 14 changes, and the natural frequency changes according thereto. At this time, when the deformation degree of the O-rings 22 by the pressing members 23 is changed to adjust the spring constant k of the O-rings 22, because the natural frequency of the damper 21 is adjusted, the vibration on the ram stock 15 side can be efficiently damped. The NC device 24 can perform the control based on the map of the pressing amount of the O-rings 22 depending on the shifting position of the ram stock 15 (the attachment 17).

Thus, in the horizontal boring and milling machine and the processing method thereof according to the third embodiment, the damper 21 is provided on the ram stock 15 as the vibration damping unit, the O-ring 22 is provided between the ram stock 15 and the damper 21 as the elastic body, so that the O-ring 22 can be deformed by the pressing member 23 as the deforming unit. The NC device 24 as the deformation-degree adjusting unit can adjust the deformation degree of the O-ring 22 by the pressing member 23 according to the shifting position of the attachment 17.

Accordingly, when the shifting position of the ram stock 15 to which the attachment 17 is attached is changed, the NC device 24 adjusts the aperture of the flow regulating valve 37 according to the shifting position hereof, and supplies (or exhausts) the predetermined hydraulic pressure to the respective pressure chambers 33 so that the respective pressing members 23 move to change the pressing amount of the O-rings 22 and deform the shape thereof, and the spring constant of the O-rings 22 is changed to adjust the natural frequency of the damper 21. Therefore, the natural frequency of the damper 21 is tuned to that of the ram stock 15, the vibration of the ram stock 15 is damped due to the resonance phenomena of the damper 21 and the ram stock 15, and the vibration of the tool is efficiently damped, thereby enabling to improve the machining accuracy.

Fourth Embodiment

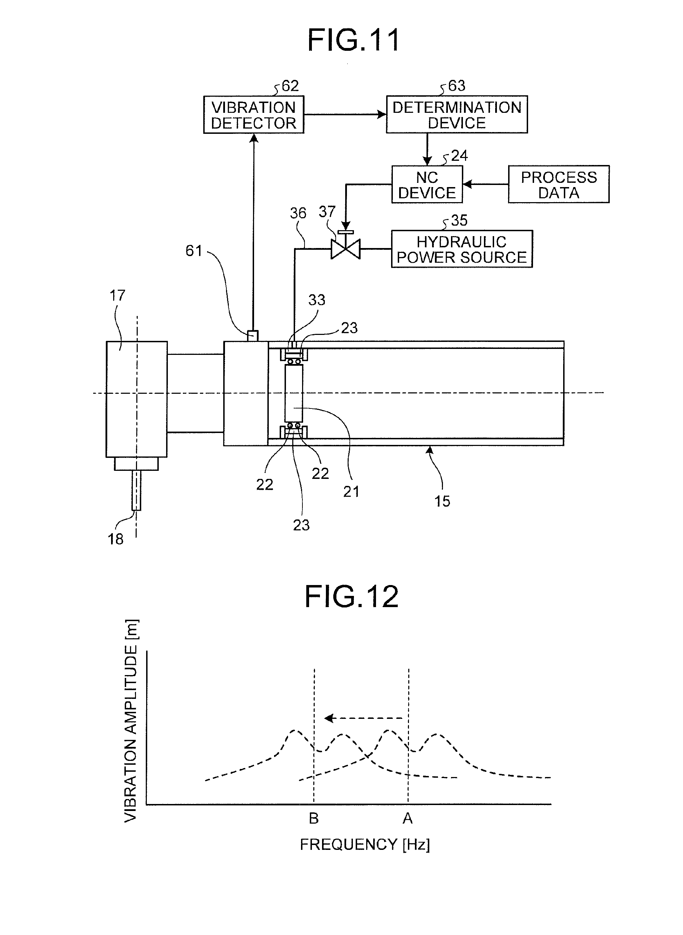

Fig. 11 is a schematic configuration diagram of a horizontal boring and milling machine as a machine tool according to a fourth embodiment of the present invention. Fig. 12 is a graph expressing vibration amplitude with respect to a frequency. Like reference numerals refer to like parts having the same function as in the above embodiments, and redundant explanations thereof will be omitted.

In the horizontal boring and milling machine according to the fourth embodiment, as shown in Fig. 11, the damper 21 is supported inside of the ram stock 15, and the O-ring 22 is provided between the ram stock 15 and the damper 21 so that it comes in contact with the damper 21. Also in the ram stock 15, the pressing member 23 that presses and deforms the O-ring 22 is provided. The NC device 24 is provided, which adjusts the deformation degree of the O-ring 22 by the pressing member 23, that is, the pressing amount depending on the mass and the shifting position of the attachment 17. In this case, the O-ring 22 is pressed by the pressing member 23 to adjust the deformation degree, thereby adjusting the natural frequency of the damper 21.

Accordingly, when the flow regulating valve 37 is opened to adjust the aperture thereof, hydraulic pressure of the hydraulic power source 35 is supplied from the respective continuous holes 34 to the respective pressure chambers 33 through the hydraulic piping 36, so that the respective pressing members 23 move forward to press the O-rings 22 to deform the shape thereof and change the spring constant of the O-rings 22, thereby enabling to adjust the natural frequency of the damper 21.

In this case, an acceleration sensor 61 as a vibration detecting unit is provided on the ram stock 15, a detection result of the acceleration sensor 61 is transmitted to a vibration detector 62. The vibration detector 62 calculates the vibration amplitude of the ram stock 15 and transmits a calculation result to a determination device 63. The determination device 63 determines whether the vibration amplitude is within a favorable range. When it is determined that the vibration amplitude of the ram stock 15 is not within the favorable range, the NC device 24 adjusts the aperture of the flow regulating valve 37 so that the vibration amplitude of the ram stock 15 is within a favorable range and controls the hydraulic pressure supplied to the respective pressure chambers 33 to thereby adjust the pressing amount of the O-ring 22 by the pressing member 23 and adjust the deformation degree thereof, thereby adjusting the natural frequency of the damper 21.

Accordingly, the vibration detector 62 calculates the vibration amplitude of the ram stock 15 based on the detection result of the acceleration sensor 61. The determination device 63 determines whether the vibration amplitude is within the favorable range and transmits the determination result to the NC device 24. When it is determined that the vibration amplitude of the ram stock 15 is not within the favorable range, the NC device 24 moves the pressing member 23 by the hydraulic pressure to change the pressing amount of the O-ring 22 to deform the shape thereof, so that the spring constant of the O-ring 22 changes to adjust the natural frequency of the damper 21. Therefore, the natural frequency of the damper 21 is tuned to that of the ram stock 15, the vibration of the ram stock 15 is damped due to the resonance phenomena of the damper 21 and the ram stock 15, and the vibration of the tool is efficiently damped, thereby enabling to improve the machining accuracy.

Therefore, as in the fourth embodiment, if machining is performed by the horizontal boring and milling machine in which the damper 21 is attached to the ram stock 15, for example as shown in Fig. 12, even if the vibration amplitude is changed from the damped state at the frequency A to the frequency B due to replacement of the attachment 17 or movement of the ram stock 15, the vibration amplitude can be appropriately damped.

Thus, in the horizontal boring and milling machine and the processing method according to the fourth embodiment, the ram stock 15 is equipped with the acceleration sensor 61 as the vibration detector, and the NC device 24 adjusts the pressing amount of the O-ring 22 by the pressing member 23 so that the vibration amplitude of the ram stock 15 is within the favorable range, thereby enabling to adjust the deformation degree.

Therefore, when vibration occurs in the ram stock 15, while the ram stock 15 is descending in the horizontal boring and milling machine, the NC device 24 adjusts the aperture of the flow regulating valve 37 to supply (or exhaust) the predetermined hydraulic pressure to the respective pressure chambers 33. Accordingly, the respective pressing members 23 move to change the pressing amount of the O-rings 22 and deform the shape thereof, and the spring constant of the O-rings 22 changes, thereby adjusting the natural frequency of the damper 21. Therefore, the natural frequency of the damper 21 is tuned to that of the ram stock 15, the vibration of the ram stock 15 is damped due to the resonance phenomena of the damper 21 and the ram stock 15, and the vibration of the tool is efficiently damped, thereby enabling to improve the machining accuracy.

In the respective embodiments, the O-rings 22, 42 are applied as the elastic member. However, the material thereof is not limited to rubber, and any material can be used so long as the spring constant is changed by deforming the shape thereof. For example, a very soft silicone-based gel material ($\alpha$Gel®) or the like can be used.

INDUSTRIAL APPLICABILITY

The machine tool and the processing method according to the present invention enable downsizing of an apparatus and space saving, and can be applied to any machine tools.

**Claims**

1. A machine tool having a machine tool body, a movable body movably supported with respect to the machine tool body, a spindle rotatably supported by the movable body, and an attachment attachable and detachable to and from a tip end of the movable body, the machine tool comprising:

   a vibration damping unit provided on the movable body;
   an elastic body provided between the movable body and the vibration damping unit;
   a deforming unit that deforms the elastic body; and
   a deformation-degree adjusting unit that adjusts a deformation degree of the elastic body by the deforming unit depending on a mass or a shifting position of the attachment.

2. The machine tool according to claim 1, wherein a vertically movable body is supported movably along a vertical direction with respect to the machine tool, and a horizontally movable body is supported movably along a horizontal direction with respect to the machine tool, the attachment is attachable and detachable to and from the tip end of the horizontally movable body, and
   the deformation-degree adjusting unit adjusts the deformation degree of the elastic body by the deforming unit depending on the mass of the attachment or the shifting position of the attachment by the horizontally movable body.

3. The machine tool according to claim 2, wherein a damper in a ring shape is supported as the vibration damping unit inside of the horizontally movable body via the elastic body, a pressing member that presses and deforms the elastic body is provided as the deforming unit inside of the horizontally movable body, and the deformation-degree adjusting unit presses the elastic body by the pressing member to adjust deformation degree thereof, thereby adjusting a natural frequency of the damper.

4. The machine tool according to claim 3, wherein the elastic body is an O-ring held so that it comes in contact with the damper, and the pressing member presses the O-ring to adjust the natural frequency of the damper.

5. The machine tool according to claim 1, wherein a vibration detector that detects vibration of the movable body is provided, and the deformation-degree adjusting unit adjusts a deformation degree of the elastic body according to a detection result of the vibration detector.

6. A processing method in a machine tool having a machine tool body, a movable body movably supported with respect to the machine tool body, a spindle rotatably supported by the movable body, and an attachment attachable and detachable to and from a tip end of the movable body, the processing method comprising:

providing an elastic body between the movable body and the vibration damping unit so that the elastic body can be deformed by the deforming unit; and
performing a process by a tool attached to the attachment while adjusting a deformation degree of the elastic body by the deforming unit depending on a mass or a shifting position of the attachment.

# FIG.1

# FIG.2

# FIG.3

# FIG.4

# FIG.5

SPRING CONSTANT OF O-RING [N/m]

O-RING PRESSING AMOUNT [%]

# FIG.6

NATURAL FREQUENCY OF DAMPER [Hz]

O-RING PRESSING AMOUNT [%]

# FIG.7

# FIG.8

# FIG.9

# FIG.10

# FIG.11

# FIG.12

<div align="center">**INTERNATIONAL SEARCH REPORT**</div>

| | International application No. |
|---|---|
| | PCT/JP2008/057138 |

**A. CLASSIFICATION OF SUBJECT MATTER**
*B23B19/00*(2006.01)i, *B23B19/02*(2006.01)i, *B23Q1/00*(2006.01)i, *B23Q11/00* (2006.01)i

According to International Patent Classification (IPC) or to both national classification and IPC

**B. FIELDS SEARCHED**

Minimum documentation searched (classification system followed by classification symbols)
B23B19/00, B23B19/02, B23B1/00, B23Q11/00, B23B27/00, B23B29/02

Documentation searched other than minimum documentation to the extent that such documents are included in the fields searched
Jitsuyo Shinan Koho          1922-1996   Jitsuyo Shinan Toroku Koho    1996-2008
Kokai Jitsuyo Shinan Koho   1971-2008   Toroku Jitsuyo Shinan Koho    1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | Microfilm of the specification and drawings annexed to the request of Japanese Utility Model Application No. 61684/1990(Laid-open No. 23239/1992) (Mitsubishi Heavy Industries, Ltd.), 26 February, 1992 (26.02.92), Description, page 3, line 16 to page 4, line 19; Fig. 1 (Family: none) | 1-6 |
| Y | JP 2005-516780 A  (Kennametal Inc.), 09 June, 2005 (09.06.05), Par. Nos. [0013] to [0016]; Fig. 2 & US 2003/0147707 A1    & WO 2003/066260 A1 | 1-6 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 May, 2008 (30.05.08) | 10 June, 2008 (10.06.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/057138

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 11-506396 A  (Design & Manufacturing Solutions, Inc.),<br>08 June, 1999 (08.06.99),<br>Page 14, line 5 to page 15, line 21; page 18, line 12 to page 22, line 19; Figs. 1, 3<br>& US 5518347 A          & WO 1996/037338 A1 | 1-6 |
| Y | JP 11-188566 A  (Okuma Corp.),<br>13 July, 1999 (13.07.99),<br>Par. Nos. [0013] to [0015]; Figs. 1 to 2<br>(Family: none) | 5 |
| A | JP 2007-21606 A  (Hitachi Via Mechanics, Ltd.),<br>01 February, 2007 (01.02.07),<br>Par. Nos. [0028] to [0030]; Fig. 4<br>(Family: none) | 1-6 |
| A | JP 2007-276015 A  (Mori Seiki Co., Ltd.),<br>25 October, 2007 (25.10.07),<br>Par. Nos. [0025] to [0029]; Figs. 2 to 3<br>(Family: none) | 1-6 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3256879 B
- JP 2004150563 A